# EUROPEAN PATENT APPLICATION

(11) **EP 4 800 358 A1**
(43) Date of publication of application: **02.09.2026**
(21) Application number: 25160962.4
(22) Date of filing: 28.02.2025
(51) Int. Cl.: G01D 4/00, H02J 13/00, H02J 3/00

(54) **HIGH IMPEDANCE FAULT (HIF) LOCATION TO ASSIST FASTER REPAIR AND OUTAGE RESTORATIONS**

(71) Applicant: Hitachi Energy Ltd, 8050 Zürich (CH)
(72) Inventor: WANG, Zhenyuan, Apex, NC, 27502 (US); SHCHETININ, Dmitry, 5600 Lenzburg (CH); CHMIELOWIEC, Krzysztof, 32-089 Beblo (PL); SHIRSAT, Ashwin, Apex, NC 27502 (US); EKOMWENRENREN, Etinosa, Longueuil, Quebec, J4K 4Y6 (CA)
(74) Representative: Vossius & Partner Patentanwälte Rechtsanwälte mbB

(57) **Abstract**

A high impedance fault (HIF) may cause a section of a power line to burn open. When the fault current is in the same order of magnitude as the normal load current, the protection device that is upstream from the faulted power line will not trip, which may make it difficult to quickly identify the location of the faulted power line. Accordingly, disclosed embodiments leverage advanced metering infrastructure (AMI) data in a weighted least squares (WLS) distribution state estimation to estimate a state of the power network. The estimated states from successive WLS distribution state estimations may be used to calculate power-flow drops, which are used to define the search space for the faulted power line. From this search space, a single power line may be identified as the faulted power line, such that remedial action(s) may be performed to resolve any resulting power outages.

## Description

### BACKGROUND

### Field of the Invention

The embodiments described herein are generally directed to fault localization, and, more particularly, to locating a high impedance fault (HIF) to assist faster repair and outage restorations.

### Description of the Related Art

Most high impedance fault (HIF) localization methods acquire data at a time resolution that is sufficiently high for implementation in protection relays.

For example, R. G. Ferraz, et al., "High impedance fault location formulation: A least square estimator based approach," 12th IET International Conference on Developments in Power System Protection (DPSP 2014), Copenhagen, Denmark, 2014, pp. 1-4, doi: 10.1049/cp.2014.0046, leverages the voltage and current measurements at both ends of a transmission line, at a sampling rate of sixty-four samples per cycle, in a least-squares method, to determine the location of a fault.

Zhihua Yin, et al., "High-impedance Fault Section Location for Distribution Networks Based on t-distributed Stochastic Neighbor Embedding and Variable Mode Decomposition", Journal of Modern Power Systems and Clean Energy, 2023, employs a non-linear manifold deep-learning algorithm, called t-SNE (Stochastic Neighbor Embedding) and a fuzzy Z-means (FCM) clustering algorithm on data acquired at half a cycle.

D. Hai, et al., "Fault Location System for Distribution Network Based on Incomplete Information from Multiple Sources," 2021 6th International Conference on Smart Grid and Electrical Automation (ICSGEA), Kunming, China, 2021, pp. 378-382, doi: 10.1109/ICSGEA53208.2021.00092, describes a system for locating faults in a distribution network, in which no assumption is made about the type of fault. Hai et al. combines customer reports on outages, fault transient recordings from an operation control system and distribution automation system, information from a metering system, and other network information to determine a fault probability for each power-line segment. Manual confirmation is required to reach a conclusion.

D. S. Pereira, et al., "An Experience of Locating High-impedance Faults through Smart Meters' Alarms in Power Distribution Networks," CIRED 2021 - The 26th International Conference and Exhibition on Electricity Distribution, Online Conference, 2021, pp. 1727-1731, doi: 10.1049/icp.2021.1853, relies on the last gasps, sent by smart meters, which are processed by a cable-break algorithm.

J. D. See, et al., "Report on Real-Time Grid Analysis Pilots," in IEEE Transactions on Industry Applications, vol. 48, no. 4, pp. 1170-1176, July-Aug. 2012, doi: 10.1109/TIA.2012.2199910, discusses the importance of acquiring real-time data from advanced metering infrastructure (AMI), but is not related to fault localization.

### SUMMARY

Systems, methods, computer programs, and non-transitory computer-readable media are disclosed for locating a high impedance fault (HIF), within a power network, to assist faster repair and outage restorations. A first objective achievable by disclosed embodiments is faster localization of faults, without the need for field inspection or a dedicated protection relay algorithm, and especially for high impedance faults in which the upstream protection devices may not trip. A second objective achievable by disclosed embodiments is increased accuracy in the localization of faults. A third objective achievable by disclosed embodiments is a reduction in the search space for fault localization.

In an embodiment, a method comprises using at least one hardware processor to: receive an indication of a value of each of one or more advanced metering infrastructure (AMI) data points for each of one or more AMI meters in a power network; execute a weighted least squares (WLS) distribution state estimation to estimate a state of the power network by minimizing a difference between measured values and estimated values of one or more network parameters, wherein the one or more network parameters comprise the one or more AMI data points; and identify an open network element in the power network based on the estimated state of the power network. The open network element may be a broken section of a power line in the power network, fuse, or sectionalizer.

The one or more network parameters may be a plurality of network parameters, wherein the plurality of network parameters comprises one or more supervisory control and data acquisition (SCADA) data points, the one or more AMI data points, and one or more pseudo data points. The method may further comprise using the at least one hardware processor to configure a weight of each of the plurality of network parameters, in the WLS distribution state estimation, such that the one or more AMI data points are weighted higher than the one or more pseudo data points, and the one or more SCADA data points are weighted higher than the one or more AMI data points for any AMI meters that are downstream from an inferred outage device in the power network. The one or more SCADA data points may comprise at least one of voltage, active power, or reactive power, wherein a value of each of the one or more SCADA data points is a measured value. The one or more pseudo data points may comprise at least one of active power and reactive power, wherein a value of each of the one or more pseudo parameters is an estimated value.

The one or more AMI data points may comprise at least one of voltage or an indication of whether or not a respective one of the one or more AMI meters is supplied with power from the power network, wherein a value of each of the one or more AMI data points is a measured value from the respective one of the one or more AMI meters.

The method may further comprise using the at least one hardware processor to: determine whether or not an outage indication has been received for any of the one or more AMI meters; and when determining that an outage indication has been received for at least one of the one or more AMI meters, within the WLS distribution state estimation, set a power at a node, which represents a bus that supplies power to a load attached to the at least one AMI meter within the power network, to zero. The outage indication may be either a last-gasp communication from the at least one AMI meter or a trouble call for the at least one AMI meter.

Identifying the open network element may comprise: for each of a plurality of network elements in the power network, calculating a power-flow drop at the network element from a first execution of the WLS distribution state estimation to a second execution of the WLS distribution state estimation; and determining the open network element, from the plurality of network elements, based on the calculated power-flow drops for the plurality of network elements. The WLS distribution state estimation may be executed periodically, wherein the second execution is one period after the first execution. The plurality of network elements may comprise a plurality of sections of one or more power lines downstream from an inferred outage device. Determining the open network element may comprise: sorting the plurality of network elements according to the calculated power-flow drops; and selecting at least one of the sorted plurality of network elements, from a subset of the sorted plurality of network elements for which the calculated power-flow drop satisfies a predefined threshold, as the identified open network element. The identified open network element may comprise one of the plurality of network elements, from among all of the plurality of network elements for which the calculated power-flow drop satisfies a predefined threshold, that is most upstream. The predefined threshold may be determined based on a load flow analysis of each of a plurality of first scenarios in which the power network has no fault and a load flow analysis of each of a plurality of second scenarios in which the power network has a fault, wherein a location of the fault is varied across the plurality of second scenarios.

Identifying the open network element may comprise: dividing a plurality of AMI meters, upstream from an inferred outage device, in the power network, into a plurality of groups; from each of the plurality of groups, sampling a subset of the AMI meters in that group, and transmitting an AMI ping request to each AMI meter in the sampled subset; and determining the open network element based on one or both of responses or non-responses to the AMI ping requests.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions (e.g., computer program) stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for management of a power network, according to an embodiment;
FIGS. 4A-4E illustrate different scenarios in which a broken section of a power line may not cause tripping of the upstream protection device, according to examples;
FIG. 5 illustrates a process for high impedance fault (HIF) localization, according to an embodiment;
FIG. 6 illustrates a process for identifying a downstream open network element, according to an embodiment;
FIG. 7 illustrates a process for identifying an upstream open network element, according to an embodiment; and
FIG. 8 illustrates a timing diagram for a process for HIF localization, according to an embodiment.

### DETAILED DESCRIPTION

In an embodiment, systems, methods, and non-transitory computer-readable media are disclosed for locating a high impedance fault (HIF), within a power network, to assist faster repair and outage restorations. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### Infrastructure

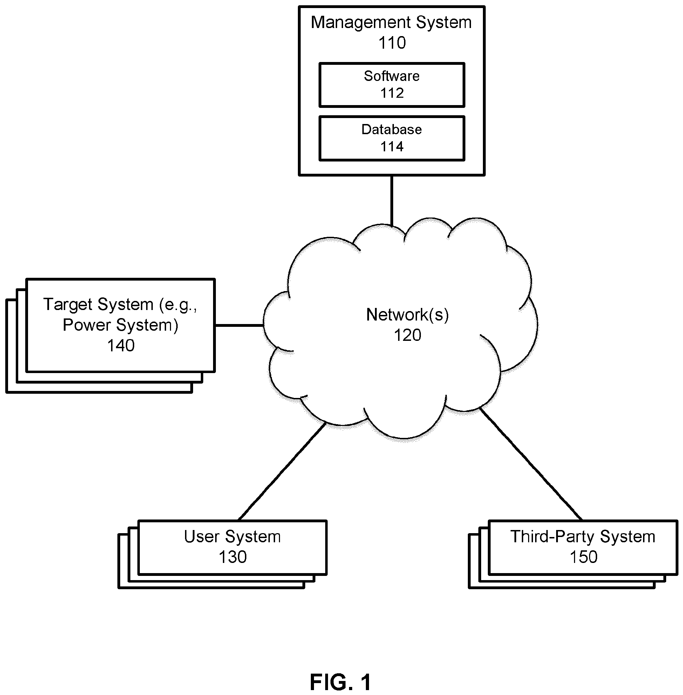

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), an outage management system (OSM), and the like, or any combination of such systems. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems 130, target systems 140, third-party systems 150, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and other elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data are monitored, analyzed, and/or acted upon. However, in the context of specific, non-limiting examples that are provided throughout the present disclosure, it will be assumed that target system 140 comprises or consists of a power system. A power system may comprise one or more, and generally a plurality of, power assets connected in a power network, which may comprise a power distribution network, a power transmission network, and/or the like. The power assets may comprise power resources, such as power generators, energy storage systems, electrical loads (e.g., rechargeable energy storage system or other controllable load, non-controllable load, etc.), and/or the like, as well as other types of power assets, such as transformers, inverters, power lines, and/or any other electrical component supporting the power system. Power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Electrical loads may comprise anything that consumes power, including, without limitation, electric vehicles, appliances, machines, commercial buildings, residential buildings, and/or the like.

The power network of a power system may be represented as a plurality of nodes that are connected to each other by edges. Each node may represent one of a plurality of buses in the power network, and each edge may represent a power line connecting two buses within the power network. A bus is a common connection point at which one or more network elements are connected. Examples of network elements include, without limitation, power generators, loads, power lines (e.g., transmission lines, distribution lines, etc.), transformers, substations, circuit breakers, switches, capacitors, inductors, fuses, sectionalizers, reclosers, and the like. A power line may be a single-phase or three-phase power line.

Third-party system(s) 150 may comprise any type or types of computing devices capable of wired and/or wireless communication. However, it is generally contemplated that third-party system 150 would comprise one or more servers that supply extrinsic data to management system 100. The extrinsic data may represent historical, current, and/or forecasted values of one or more parameters, relevant to target system 140, such as weather parameters (e.g., temperature, humidity, wind speed, pressure, etc.), market parameters (e.g., energy prices), socio-political events (e.g., protests, law-enforcement warnings, etc.), and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL^{™}, Oracle^{™}, IBM^{™}, Microsoft SQL^{™}, Access^{™}, PostgreSQL^{™}, MongoDB^{™}, and/or the like, and including cloud-based databases, proprietary databases, and unstructured databases.

### Example Processing Device

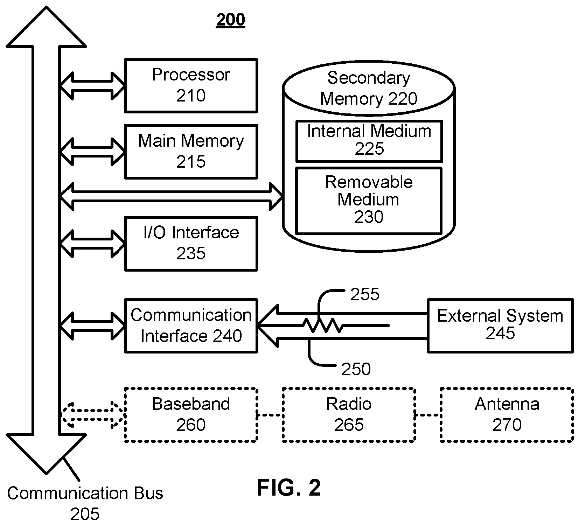

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, target system(s) 140, third-party system(s) 150, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

### Example Data Flow for Target System Management

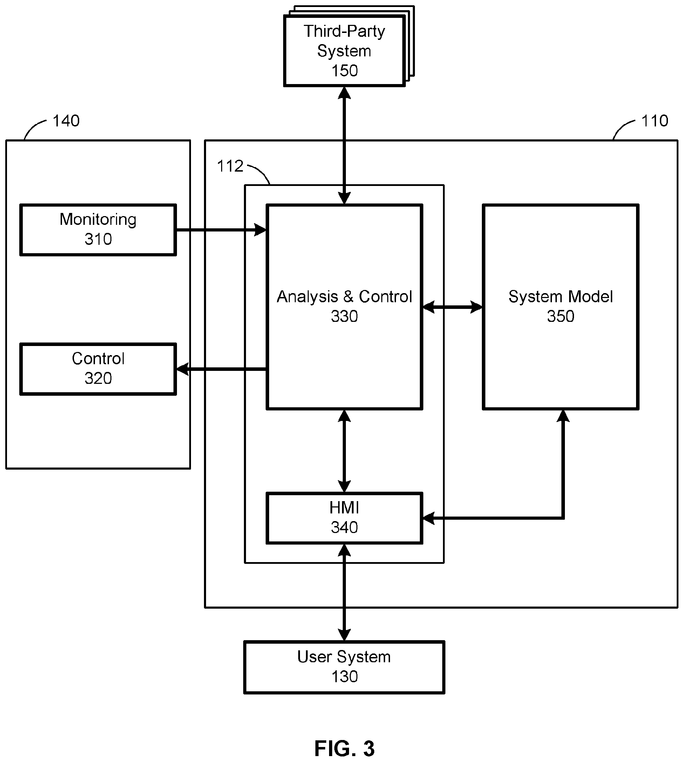

FIG. 3 illustrates an example data flow between a management system 110, a user system 130, a target system 140, and one or more third-party systems 150, according to an embodiment. Target system 140 may comprise a monitoring module 310 and a control module 320. Software 112 of management system 110 may comprise an analysis and control module 330, and a human-to-machine interface (HMI) 340. Analysis and control module 330 may interact with or comprise a system model 350, which may be stored in database 114 of management system 110. It should be understood that communications between the various systems may be performed via network(s) 120. In addition, communications between a pair of modules may be performed via an application programming interface (API) provided by one of the modules or by other interprocess communication means.

Monitoring module 310 may monitor and collect data that are output by one or more sensors in target system 140 (e.g., sensors in the power network of a power system). Monitoring module 310 may also otherwise derive data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or otherwise derived, or periodically. As used herein, the term "real time" includes events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with system model 350 to determine a configuration for target system 140 (e.g., one or more resources or other power assets in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs.

Each third-party system 150 may supply extrinsic data to analysis and control module 330. Third-party system 150 may transmit or push the extrinsic data to analysis and control module 330 (e.g., via an API of analysis and control module 330). Alternatively, analysis and control module 330 may retrieve or pull the extrinsic data from third-party system 150 (e.g., via an API of third-party system 150). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power system, the exogenous data may comprise one or more historical and/or forecast weather parameters, such as temperature, humidity, solar insolation, wind, barometric pressure, precipitation, alerts, and/or the like. In this case, third-party system 150 may comprise a weather service, such as the United States National Weather Service. As another example, the extrinsic data may comprise one or more historical and/or forecast market parameters, such as an energy price in a primary or ancillary services market. In this case, third-party system 150 may comprise an energy market in which energy or ancillary services are traded.

Analysis and control module 330 may receive intrinsic data from monitoring module 310 and/or database 114 and/or receive extrinsic data from one or more third-party systems 150, and derive the value of each of one or more input features from the received intrinsic and/or extrinsic data. The received data may itself comprise the value of an input feature, or the value of an input feature may be otherwise derived (e.g., calculated, inferred, interpolated, imputed, etc.) from the received data. Analysis and control module 330 may input the values of the input features into a system model 350, which may output values of a target. The target may comprise a value of each of one or more computed, estimated, or predicted parameters, a classification or a probability of each of one or more classifications, the value of each of one or more variables representing a computed, estimated, or predicted state of target system 140, and/or the like.

Analysis and control module 330 may make decisions and/or perform operations on target system 140, based on the value of the target output by system model 350. As an example, analysis and control module 330 may utilize the value of the target to determine an optimal configuration of target system 140 at some future time. Based on this determination, analysis and control module 330 may automatically (i.e., without any user involvement), semi-automatically (e.g., with user approval or confirmation via human-to-machine interface 340), or manually (e.g., in response to a manual user request) initiate a control operation, to change a real-time or scheduled operation of target system 140, based on the optimal configuration. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power system, examples of such control include, without limitation, setting a setpoint (e.g., active and/or reactive power for power generators, voltage, etc.), adjusting the power output of a power generator, adjusting the charging or discharging of an energy storage system, adjusting the power input to a load, activating or deactivating a load, curtailing a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, a configuration of target system 140 determined by analysis and control module 330, a control decision or recommendation for target system 140 determined by analysis and control module 330, a work order (e.g., repair or service order) or dispatch for one or more components (e.g., faulted power line) of target system 140, and/or the like. In addition, the graphical user interface may provide inputs that enable a user of user system 130 to configure settings of analysis and control module 330, train, configure, test, and/or deploy system model 350, accept or reject decisions, or recommendations, specify, approve, and/or reject controls to be transmitted to control module 320 of target system 140, approve and/or reject work orders or dispatches, analyze target system 140, and/or the like.

System model 350 may be stored as a data structure in database 114 and accessed by modules, such as analysis and control module 330, via any known means (e.g., via an API of database 114, a direct query of database 114, etc.). For example, system model 350 may be loaded into memory (e.g., 215 and/or 220) from database 114 and executed by management system 110 as a service (e.g., as a microservice) that is accessible to analysis and control module 330 via an API. Management system 110 may provide an individual system model 350 for each target system 140 that is managed by management system 110, and/or a collective system model 350 that is used for two or more target systems 140. System model 350 for a power network may include a network model that represents a network topology of the power network, a weighted least squares (WLS) distribution state estimation (DSE) model of the power network, and/or the like.

### Introduction

A high impedance fault (HIF) may cause a section of a power line to burn open. When the fault current is in the same order of magnitude as the normal load current, the protection device that is upstream from the faulted power line will not trip. However, there will be customer outages downstream from the faulted power line, which will result in last gasps from the customers' smart meters, in the event of an advanced metering infrastructure (AMI), and/or trouble calls (e.g., manual trouble calls from customers experiencing outages, automated trouble calls from an AMI meter, etc.). All of this information will be received by management system 110, which will need to locate (e.g., via analysis and control module 330) the broken section of the power line, in order to take appropriate remedial action, such as dispatching an inspection and/or repair crew to the correct location, tripping one or more circuit breakers for safety, rerouting power to mitigate the customer outages, and/or the like. The time required to identify and correctly locate the broken section of the power line is very important to utilities, because a shorter and more accurate localization time can help mitigate the impact of the outages.

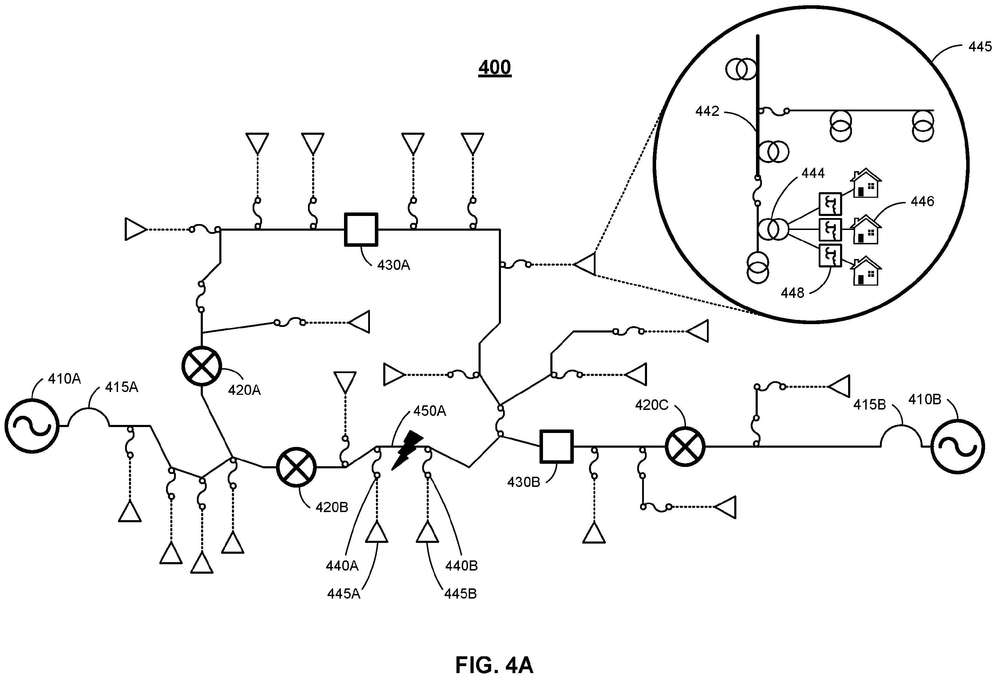

FIGS. 4A-4E illustrate different scenarios in which a broken section of a power line may not cause tripping of the upstream protection device. Each figure illustrates the same power network 400, containing the same network elements. In these examples, power network 400 is a distribution network. The network elements in power network 400 include substations 410, circuit breakers 415, reclosers 420, normally open (NO) tie switches 430, fuses 440, and power-line sections 450. As is well known in the art, a substation 410 is a facility that receives high-voltage electricity from a transmission network, controls its flow, and lowers the voltage to a level suitable for power network 400. A circuit breaker 415 is an electrical switch that automatically turns off power to an overloaded circuit to prevent damage and fires. A recloser 420 is an automatic electrical switch that trips (i.e., opens) when a fault is detected. A NO tie switch 430 is an electrical switch that is normally open, such that no power flows across NO tie switch 430 unless intentionally closed. A fuse 440 is a safety device that protects electrical equipment by interrupting the flow of electricity when an excessive current (e.g., overload or short circuit) occurs. Power-line sections 450 are sections of an electrical power line (e.g., above-ground or underground distribution line) that electrically connects two other network elements in the power network. It should be understood that power network 400 may comprise other network elements, including distributed energy resources, sectionalizers, and/or the like, which are not specifically illustrated herein. A distributed energy resource may be a photovoltaic system, wind turbine, battery energy storage system, fuel cell, diesel power generator, and the like. A sectionalizer is an automatic switching device that isolates a faulted power-line section 450 by "counting" the number of times an upstream circuit breaker 415 or recloser 420 operates to clear a fault, and opening itself if the fault is deemed permanent, thereby isolating the faulted power-line section 450.

As used herein, a reference numeral with an appended letter will be used to refer to a specific component, whereas the same reference numeral without any appended letter will be used to refer collectively to a plurality of the component or to refer to a generic or arbitrary instance of the component. Thus, for example, the term "substations 410" refers collectively to substations 410A and 410B, and the term "substation 410" may refer to either one of substation 410A or substation 410B.

A fuse 440 may connect a lateral 445 to the feeder line, or one feeder line to another feeder line. When too much current flows through a fuse 440, a metal wire or strip, which provides electrical conductivity through the fuse 440, melts or "blows" to thereby stop or interrupt the current. It should be understood that, in a radial distribution feeder, a blown fuse 440 may result in an electrical outage on the respective lateral 445 or downstream feeder line.

As used herein, the terms "upstream" and "downstream" are relative to a traversal of power network 400 starting from a substation 410 as the root and ending in laterals 445 as leaf nodes. This generally corresponds to the direction of power flow from each substation 410 to connected laterals 445, assuming a radial network (i.e., no loops and no return power flow). Thus, for example, a fuse 440 is upstream from its respective lateral 445, and a lateral 445 is downstream from its respective fuse 440.

Each lateral 445 may comprise one or more electrical lines 442 and one or more service transformers 444 that supply electric power to one or more loads 446 (e.g., customers' residences, commercial buildings, etc.). The power flow to each load 446 may be measured, in real time, by an advanced metering infrastructure (AMI) meter 448 between service transformer 444 and load 446. It should be understood that power flow to a load 446 could be negative if the load 446 is connected to a behind-the-meter energy resource (e.g., photovoltaic solar panels on the roof of a building). AMI meter 448 may communicate the measured power flow to management system 110 at a set sampling rate. In particular, the measured power flow may be transmitted to management system 110 (e.g., via monitoring module 310) at the expiration of each of a plurality of time intervals (e.g., every minute, every five minutes, every ten minutes, every fifteen minutes, etc.). In a preferred embodiment, the time interval is sufficiently short that the power flow, between the respective service transformer 444 and load 446, can be assumed to be stable over the time interval. In addition, when a power outage occurs at load 446, AMI meter 448 may transmit a "last gasp" to management system 110. A last gasp is a message, signal, or other communication that is transmitted by AMI meter 448 when it detects a power outage and before completely shutting down, essentially notifying management system 110 that AMI meter 448 has lost power. Each AMI meter 448 may be a smart meter that allows for detailed energy monitoring and is configured for two-way communications with the utility (e.g., with management system 110 or an intermediate system).

FIG. 4A illustrates a radial power network 400 in which a high impedance fault (HIF) occurs on one power-line section 450A on the main feeder line between fuse 440A, which connects lateral 445A to the feeder line, and fuse 440B, which connects lateral 445B to the feeder line. In this scenario, NO tie switches 430A and 430B are open. As a result of the fault, outages to loads will occur downstream from "broken" power-line section 450A, including on lateral 445B and on any other laterals 445 connected to the feeder line between NO tie switches 430A and 430B. The term "broken" in this context refers to a section of the power line that is burnt open, such that an outage occurs. Notably, the HIF current that causes power-line section 450A to burn open may be on the same order of magnitude (e.g., when the broken power line is not in contact with the ground) as the normal load current on power-line section 450A, such that the high impedance fault is unlikely to be detected by an upstream protection device, such as recloser 420B. As a result, the SCADA data from the upstream protection device cannot be used to infer or confirm an outage.

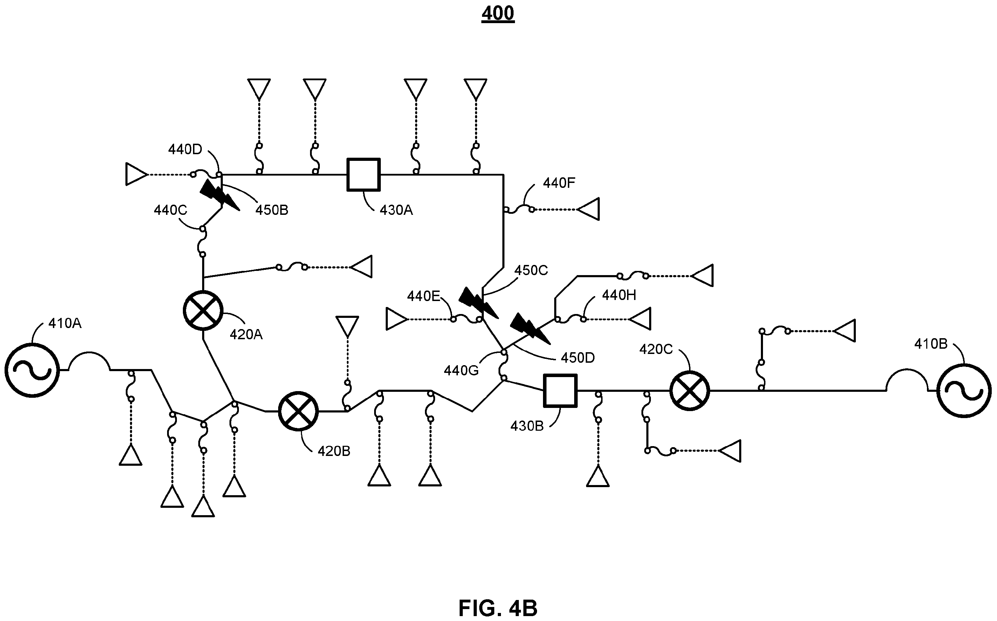

FIG. 4B illustrates a radial power network 400 in which a high impedance fault occurs on three lateral-line sections. In particular, a fault occurs on power-line section 450B between fuses 440C and 440D, on power-line section 450C between fuses 440E and 440F, and on power-line section 450D between fuses 440G and 440H. As a result of the faults on power-line sections 450B, 450C, and 450D, outages to loads will occur on the lateral line from fuse 440D to NO tie switch 430A, from fuse 440F to NO tie switch 430A, and downstream from fuse 440H. Thus, power-line sections 450B, 450C, and 450D are considered broken.

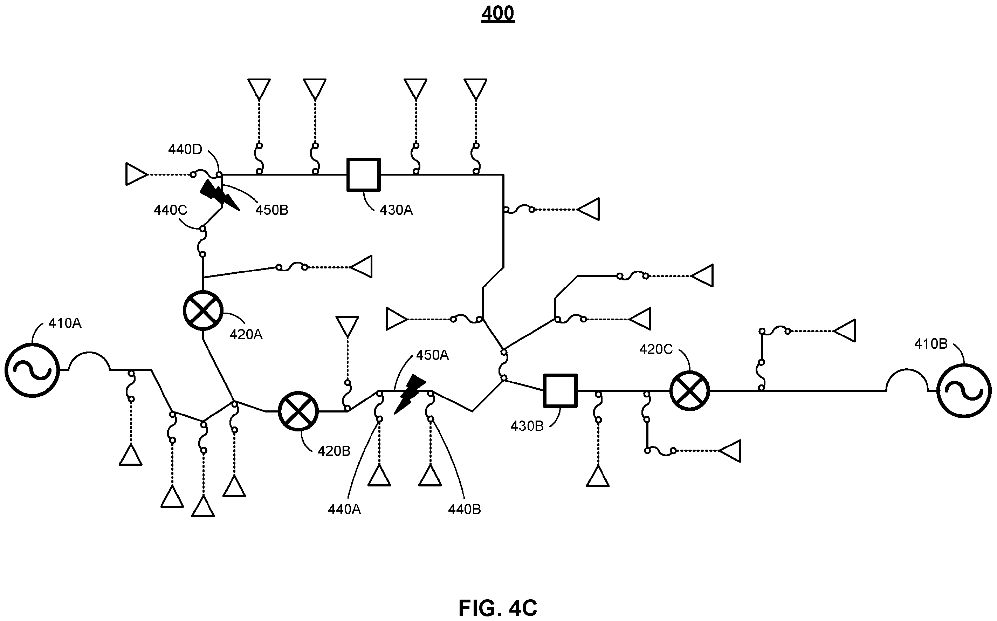

FIG. 4C illustrates a radial power network 400 in which a high impedance fault occurs on power-line section 450A on the main feeder line, and on power-line section 450B on the lateral line. As a result of broken power-line sections 450A and 450B, outages to loads will occur from fuse 440B to NO tie switch 430A and to NO tie switch 430B, and from fuse 440D to NO tie switch 430A. Thus, power-line sections 450A and 450B are considered broken.

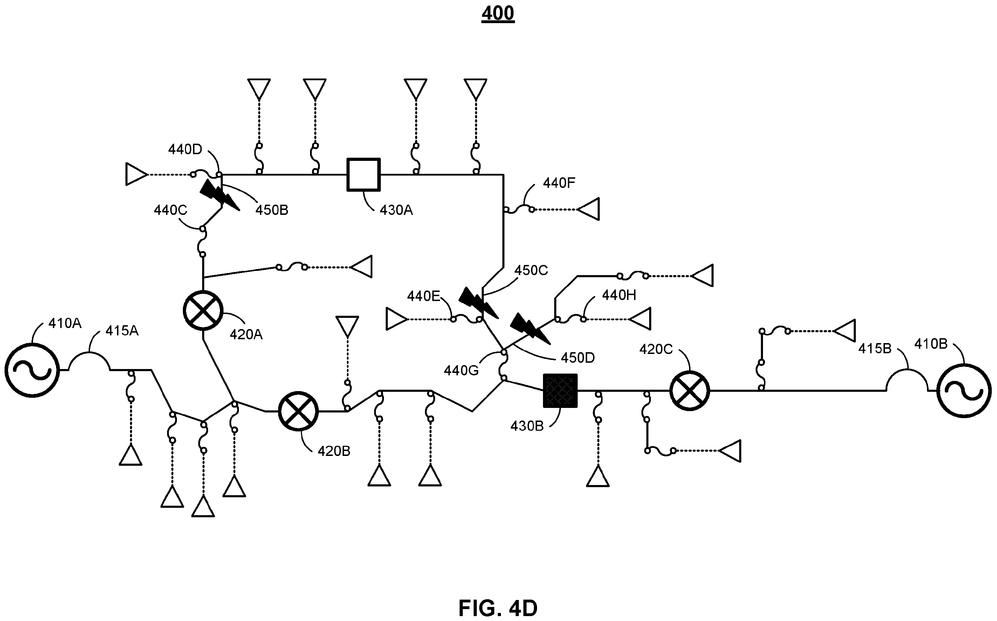

FIG. 4D illustrates power network 400 in which a high impedance fault occurs on power-line sections 450B, 450C, and 450D. In this example, power network 400 is weakly meshed or looped. In particular, NO tie switch 430B is closed, such that substations 410A and 410B represent parallel power sources. As a result of the faults on power-line sections 450B, 450C, and 450D, outages to loads will occur on the lateral line from fuse 440D to NO tie switch 430A, from fuse 440F to NO tie switch 430A, and downstream from fuse 440H. Thus, power-line sections 450B, 450C, and 450D are considered broken.

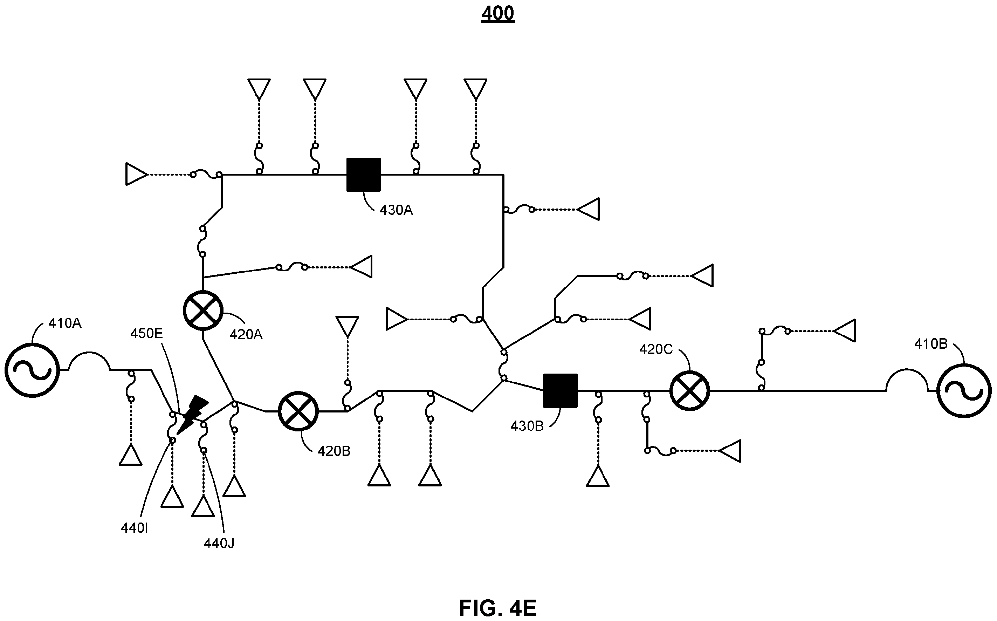

FIG. 4E illustrates a power network 400 in which a high impedance fault occurs on power-line section 450E on the main feeder line between fuses 440I and 440J. In this example, power network 400 is weakly meshed. In particular, NO tie switches 430A and 430B are closed, such that substations 410A and 410B represent parallel power sources. In this case, there are no outages, since power is supplied to the portion of power network 400 between substation 410A and fuse 440I by substation 410A, power is supplied to the portion of power network 400 between substation 410B and fuse 440J by substation 410B, and there are no loads between fuses 440I and 440J. Thus, power-line section 450E is not considered to be broken, since no loads are lost.

An objective of disclosed embodiments is to identify broken power-line section 450 as the locations of faults, so that an appropriate remedial action may be taken, such as, for example, dispatching repair crews to broken power-line section 450 to repair those broken power-line section 450 as quickly as possible, closing NO tie switch 430A or 430B to mitigate the outages, and/or the like. To this end, disclosed embodiments may utilize advanced metering infrastructure (AMI) data points transmitted by AMI meters 448, instead of relying solely on SCADA data points transmitted by protection devices. By virtue of utilizing the AMI data points, disclosed embodiments are able to locate all of the broken power-line sections 450 illustrated herein.

### Process

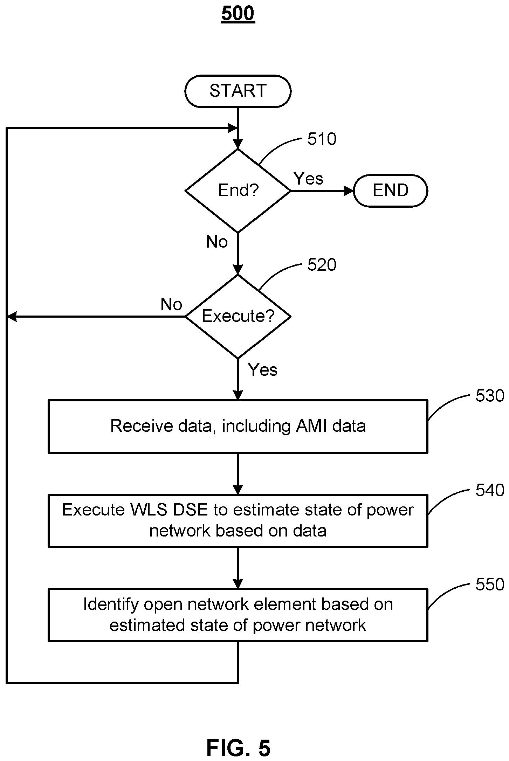

FIG. 5 illustrates a process 500 for high impedance fault (HIF) localization, according to an embodiment. Process 500 may be implemented by analysis and control module 330 on management system 110. While process 500 is illustrated with a certain arrangement and ordering of subprocesses, process 500 may be implemented with fewer, more, or different subprocesses and a different arrangement and/or ordering of subprocesses. Furthermore, any subprocess, which does not depend on the completion of another subprocess, may be executed before, after, or in parallel with that other independent subprocess, even if the subprocesses are described or illustrated in a particular order.

Subprocess 510 may determine whether or not to end process 500. Process 500 may execute continuously for each target system 140 for as long as target system 140 and management system 110 are operational. Alternatively, process 500 may be capable of being toggled on or off, for example, via an input of human-to-machine interface 340. When determining to end process 500 (i.e., "Yes" in subprocess 510), process 500 may end. Otherwise, when not determining to end process 500 (i.e., "No" in subprocess 510), process 500 may proceed to subprocess 520.

Subprocess 520 may determine whether or not to execute an iteration of the localization process, which utilizes a weighted least squares (WLS) distribution state estimation (DSE) and which comprises subprocesses 530-550, to identify the open network element that represents the location of the fault. The WLS distribution state estimation may be executed periodically, after each expiration of a fixed time interval (e.g., one minute, five minutes, ten minutes, fifteen minutes, thirty minutes, one hour, two hours, several hours, twelve hours, twenty-four hours, etc.), for as long as process 500 executes. The localization process may also be executed periodically and/or in response to another trigger, such as the detection of an inferred outage. For example, the localization process may be executed at the same periodicity as the WLS distribution state estimation, but only immediately after an inferred outage has been detected. When determining to execute an iteration of the localization process (i.e., "Yes" in subprocess 520), process 500 may proceed to subprocess 530. Otherwise, when not determining to execute an iteration of the localization process (i.e., "No" in subprocess 520), process 500 may return to subprocess 510 to await an end of process 500 or the next execution of the localization process.

As mentioned above, the localization process may be executed after (e.g., in response to) the detection of an inferred outage. An outage may be inferred by any suitable mechanism. In an embodiment, a classical outage-inference algorithm is used as an outage engine. The outage-inference algorithm may leverage trouble calls and a network model (e.g., of system model 350) of the power network to infer one or more outage-protection devices. Generally, each inferred outage device is a SCADA device, which is capable of providing SCADA data, that the outage engine has inferred is open, based on the trouble calls and the network model. However, the inferred outage device does not have to be a SCADA device.

The output of the outage engine is a set of one or more inferred outage devices (e.g., represented as device identifiers). In FIG. 4A, the inferred outage device may be recloser 420B. In FIG. 4B, the inferred outage devices may be fuses 440C and 440G. In FIG. 4C, the inferred outage devices may be fuse 440C and recloser 420B. In FIG. 4D, the inferred outage device may be fuses 440C and 440G. In FIG. 4E, the inferred outage device may be circuit breaker 415A. Notably, the identification of an inferred outage device does not provide the location of the specific network element (e.g., broken power-line section 450) that is open. Rather, the inferred outage device may simply be the closest SCADA outage-protection device that is upstream from the open network element. Thus, the output of the outage engine may be used as an input to the localization process, which identifies the specific network element that is open.

The most conservative mechanism for triggering an iteration of the localization process (i.e., "Yes" in subprocess 520), would be to trigger the iteration of the localization process whenever the outage engine infers an outage on a protection device, such as circuit breakers 415, reclosers 420, or fuses 440. However, this approach may significantly increase the number of iterations that the localization process is performed, since each inferred outage event will trigger such an iteration. Thus, such an approach would require careful consideration of available computing resources. In an embodiment, the triggering mechanism may be refined to additionally require one or more of the following criteria: the presence of a plurality of overhead power-line sections downstream from the inferred outage device; the observation of recent arcing activities, prior to the inferred outage time, by a transient recording device that is upstream from the inferred outage device; a history of outages (e.g., caused by animal or weather events) in the area downstream from the inferred outage device; and/or an indication that the area downstream from the inferred outage device has been flagged by a utility vegetation management system as a high priority for vegetation control. However, if the localization of an open network element is not a high priority, periodic execution of the localization process (e.g., with the next WLS distribution state estimation) may be sufficient. In this case, the open network element will be located by the next execution of the localization process, following the fault.

Subprocess 530 may receive data, including at least AMI data. The AMI data may comprise an indication of a value of each of one or more AMI data points for each of one or more AMI meters 448 in the power network. Each indication of the value of an AMI data point may be received from the respective AMI meter 448 itself or from an intermediate system that is responsible for the respective AMI meter 448. The value of each of the AMI data point(s) may be a measured value from the respective AMI meter 448. The indication of the value of an AMI data point may be the measured value of the AMI data point, a value derived from the measured value of one or more AMI data points, an indication that a last-gasp communication was received from the respective AMI meter 448 (e.g., indicating that the value of power at the AMI meter 448 is zero), an indication (e.g., binary value) of whether or not a last-gasp communication was received from the respective AMI meter, an indication that the respective AMI meter 448 responded to an AMI ping request, an indication of whether or not a response to an AMI ping request was received from the respective AMI meter 448, and/or the like. In an embodiment, the AMI data point(s) comprise voltage at the respective AMI meter 448, an indication of whether or not the respective AMI meter 448 is being supplied with power from the power network, and/or the like.

The data received in subprocess 530 may also include SCADA data. The SCADA data may comprise an indication of a value of each of one or more SCADA data points for each of one or more SCADA devices in the power network. Examples of SCADA devices include circuit breakers 415, reclosers 420, and NO tie switches 430. Each indication of the value of a SCADA data point may be received from the respective SCADA device itself or from an intermediate system that is responsible for the respective SCADA device. The value of each of the SCADA data point(s) may be a measured value from the respective SCADA device. The indication of the value of a SCADA data point may be the measured value of the SCADA data point, a value derived from the measured value of one or more SCADA data points, an indication that a communication was received from the respective SCADA device, an indication of whether or not a communication was received from the respective SCADA device, and/or the like. In an embodiment, the SCADA data point(s) comprise voltage, active power, and/or reactive power at the respective SCADA device.

The data received in subprocess 530 may also include pseudo data. The pseudo data may comprise a value of one or more pseudo data points at one or more nodes (e.g., buses) in the power network. A pseudo data point is any data point for which the value of the data point is not directly measured. The value of a pseudo data point for a node may be a calculated or estimated value based on the value(s) of one or more AMI data points, SCADA data points, and/or other pseudo data points at the node and/or one or more other nodes within the power network. In an embodiment, the pseudo data points comprise active power, reactive power, and/or the like.

Subprocess 540 may execute a WLS distribution state estimation to estimate the state of the power network based on the data received in subprocess 530. In particular, the WLS distribution state estimation minimizes a difference between measured values and estimated values of one or more network parameters. The network parameter(s) may comprise at least the one or more AMI data points. Additionally, the network parameter(s) may comprise one or more SCADA data points and/or one or more pseudo data points. In an embodiment in which there are a plurality of network parameters, subprocess 540 may configure a weight of each of the plurality of network parameters, in the WLS distribution state estimation, such that the AMI data point(s) are weighted higher than the pseudo data point(s), and the SCADA data point(s) are weighted higher than the AMI data point(s) for (e.g., from) any AMI meters 448 that are downstream from an inferred outage device (e.g., determined in subprocess 520) in the power network.

The WLS distribution state estimation may be computed according to the following objective function: ${min}_{x ∈ U} {\sum }_{m ∈ {φ}_{m}} {w}_{m} {\left({y}_{m}-{h}_{m}\left(x\right)\right)}^{2}$ ${y}_{m} ∈ \left\{{V}_{ami}, {V}_{scada}, {P}_{scada}, {Q}_{scada}, {P}_{inj}, {Q}_{inj}\right\}$ In this computation, *yₘ* represents the values of the network parameters. The network parameters may include *Vₐₘᵢ*, representing voltage in the AMI data point(s), *V_{scada},* representing voltage in the SCADA data point(s), *P_{scada}* representing active power in the SCADA data point(s), *Q_{scada}*, representing reactive power from the SCADA data point(s), *Pᵢₙⱼ,* representing injected active power in the pseudo data point(s), and *Qᵢₙⱼ*, representing injected reactive power in the pseudo data point(s). The injected active power *Pᵢₙⱼ* and reactive power *Qᵢₙⱼ* may be computed using a suitable load-allocation or load-forecast algorithm. The state of the power network is denoted by *x,* which may be constrained to a feasible set 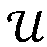 by one or more power-flow constraints. The state *x* may comprise or consist of the voltages at each of a plurality of nodes (e.g., buses) in the power network and/or power flows on each of the plurality of edges (e.g., power lines) in the power network. The set of all available network parameters m is denoted by *φₘ.* The function *hₘ*(*x*) maps the state *x* of the power network to the network parameters m, such that the function *hₘ*(*x*) is the estimated value of *yₘ.* Thus, the difference *yₘ - hₘ*(*x*) represents an error between the actual and estimated values of the network parameters. Each network parameter m may be associated with a weight *wₘ*, such that some network parameters may be weighted higher than other network parameters. For instance, as discussed elsewhere herein, AMI data points may be weighted higher than pseudo data points, and SCADA data points may be weighted higher than AMI data points for any AMI meters 448 that are downstream from an inferred outage device.

WLS distribution state estimation generally utilizes an iterative approach. In particular, the WLS distribution state estimation is performed iteratively until the calculated error converges to a satisfactory residual error (e.g., the calculated error is less than a tolerance value). After each iteration, if the calculated error has not yet converged, a next set of values of the state x are chosen, according to any suitable mechanism, with the goal of reducing the error in the next iteration. It should be understood that the estimated state x, output by the WLS distribution state estimation, will be the state x that minimized the error. The performance of the WLS distribution state estimation can be measured by the speed at which it converges, the final residual errors, and/or the like.

To increase the numerical stability of the WLS distribution state estimation, the objective function may be revised to model zero-power loads, associated with outage indications (e.g., last-gasp communications and/or trouble calls), as zero-uncertainty measurements. These zero-uncertainty measurements can then be moved from the objective function to the set of constraints. In this case, the WLS distribution state estimation may be computed according to the following: ${min}_{x ∈ U} {\sum }_{m ∈ {φ}_{m}} {w}_{m} {\left({y}_{m}-{h}_{m}\left(x\right)\right)}^{2}$ $subject to g \left(x\right) = 0$ wherein *g*(*x*) is a function that maps the state *x* of the power network to balance equations of buses with loads that are known to be zero, based on the outage indications. This formulation of the WLS distribution state estimation avoids the need to associate high weights with the AMI data points, and therefore, is more numerically stable.

Prior to each execution of the WLS distribution state estimation, module 540 may configure the WLS distribution state estimation according to the most recent available data. For example, the power flow through edges (i.e., power lines) and the power injections into nodes (e.g., buses), within the power network, may be assigned as follows: $P = \left\{\begin{matrix}0 , \\ {P}_{inj} , \\ {P}_{scada} ,\end{matrix} \begin{matrix}when node is associated with last gasp or trouble call \\ when only a pseudo data point is available for node \\ when a SCADA data point is available for node\end{matrix}\right.$ $Q = \left\{\begin{matrix}0 , \\ {Q}_{inj} , \\ {Q}_{scada} ,\end{matrix} \begin{matrix}when node is associated with last gasp or trouble call \\ when only a pseudo data point is available for node \\ when a SCADA data point is available for node\end{matrix}\right.$ In the above embodiment, subprocess 540 determines whether or not an outage indication has been received for any of the AMI meter(s) 448, and when determining that an outage indication has been received for at least one of the AMI meter(s) 448, within the WLS distribution state estimation, sets a power at a node, which represents a bus that supplies power to a load attached to the at least one AMI meter 448 within the power network, to zero. The outage indication may be a last-gasp communication from AMI meter 448 or a trouble call from or for AMI meter 448. When no outage indication has been received for an AMI meter 448 attached to the bus represented by a given node, the power at that node is set to the power indicated in the SCADA data point, when available, or the power indicated in the pseudo data point, when the SCADA data point is not available.

The weights *wₘ* may be assigned as follows: ${w}_{m} = \left\{\begin{matrix}α ∗ {w}_{0} , for all {V}_{scada} , {P}_{scada} , {Q}_{scada} ; \\ β ∗ {w}_{0} , \\ {w}_{0} ,\end{matrix} \begin{matrix} and {P}_{inj} , {Q}_{inj} assoc . with last gasp , trouble call , or ping \\ for {V}_{ami} downstream an inferred outage device \\ for all other pseudo measurements\end{matrix}\right.$ wherein *w*₀ is a base value, such as *w*₀ = 1, *α* is a first coefficient, *β* is a second coefficient, and *α* » *β* » 1. As discussed elsewhere herein, the weights *wₘ* differentiate the different types of network parameters that are utilized by the WLS distribution state estimation. The specific values of *α* and *β* can be tuned based on experimentation. Generally, the more credible a network parameter is, the higher the weight *wₘ* that will be associated with that network parameter. Notably, since the outage engine does not identify the location of the open network element, the same pre-fault network topology is used for the WLS distribution state estimation.

In an alternative or additional embodiment, the weights *wₘ*, may be assigned according to one or more other criteria. For example, the criteria that were described above with respect to the triggering mechanism, may be used to assign the weights *wₘ*. These criteria included one or more of: the presence of a plurality of overhead power-line sections downstream from the inferred outage device; the observation of recent arcing activities, prior to the inferred outage time, by a transient recording device that is upstream from the inferred outage device; a history of outages (e.g., caused by animal or weather events) in the area downstream from the inferred outage device; and/or an indication that the area downstream from the inferred outage device has been flagged by a utility vegetation management system as a high priority for vegetation control. A network parameter for a network element that satisfies one or more of the criteria may be assigned a higher weight than pseudo data points, but a lower weight than SCADA data points and/or AMI data points.

Disclosed embodiments are primarily described herein as using AMI data points. However, in an alternative embodiment (e.g., in which AMI data points are not available), only SCADA data point and/or pseudo data points are used. In this case, the localization process, including the configuration and execution of the WLS distribution state estimation, may be performed in the same manner, but will simply not utilize AMI data points. For example, the power flows may be assigned and the weights may be calculated in the same manner as described above.

The localization process may utilize the open time at which the open network element opened (e.g., in a criterion used to trigger the execution of the localization process in subprocess 520, in determining a time for which to obtain the network parameters in subprocess 530, etc.). In this case, the localization process may determine the open time based on last-gasp communications received from AMI meters 448. Each last-gasp communication will be associated with at least one timestamp indicating when the last-gasp communication was transmitted and/or received. It should be understood that last-gasp communications may be received from only a percentage of AMI meters 448 that experience an outage. The outage engine may flag an inferred outage at time *t_{inferred}* on an inferred outage device. The open-time determination may iterate through all last-gasp communications, received from AMI meters 448 that are downstream from the inferred outage device, in a past time window from time *t_{inferred}* back to a time *t_{inferred} - T*, wherein *T* is a predefined time duration (e.g., one-hundred-eighty seconds) that can be set based on the speed at which the outage engine can infer an outage from trouble calls. The earliest timestamp is identified, from among ${t}_{lg}^{i}$*, i* ∈ [1, *N*], wherein *N* is the number of last-gasp communications received from AMI meters 448 that are downstream from the inferred outage device. This earliest timestamp represents the open time *tₒₚₑₙ* at which the network element, downstream from the inferred outage device, opened.

In an embodiment in which the localization process is performed periodically after the detection of an inferred outage, subprocess 540 may correspond to the periodic execution of the WLS distribution state estimation. Otherwise, in an embodiment in which the localization process is performed immediately in response to the inferred outage, the localization process 540 may execute the WLS distribution state estimation outside of its periodicity. In either case, the estimated state from the WLS distribution state estimation of subprocess 540 represents a post-fault state of the power network.

Subprocess 550 may identify an open network element in the power network based on the post-fault state *x* of the power network that was estimated in subprocess 540. Subprocess 550 may also use a pre-fault state *x* of the power network, determined by the most recent execution of the WLS distribution state estimation that preceded the fault. The open network element may be any element, within the power network, that is individually represented within the network model (e.g., of system model 350), and that can open as a result of a high impedance fault. However, the benefits of disclosed embodiments will be highest when the open network element is a non-SCADA device. For example, the open network element may be a broken section of a power line 450 (e.g., overhead distribution line) in the power network, a fuse 440, a sectionalizer, and/or the like.

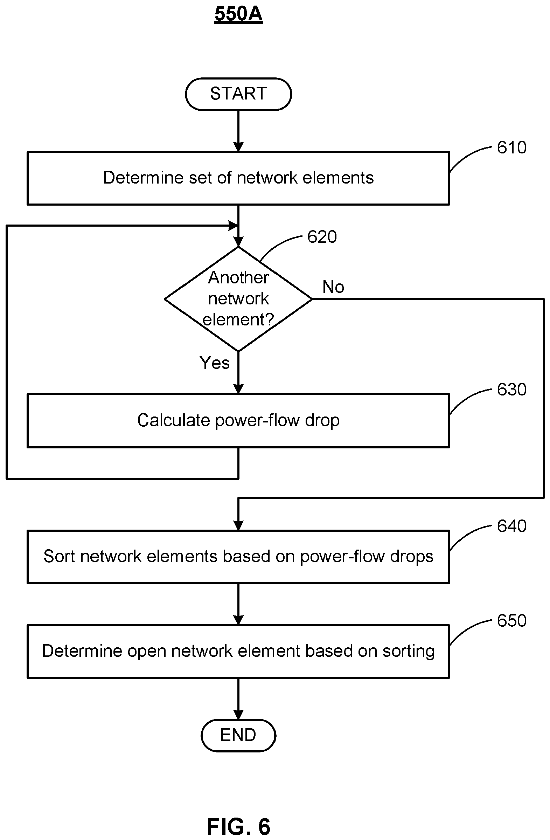

FIG. 6 illustrates an exemplary implementation of subprocess 550 from process 500, according to an embodiment. In particular, subprocess 550 may comprise or consist of process 550A to identify an open network element that is downstream from an inferred outage device. While process 550A is illustrated with a certain arrangement and ordering of subprocesses, process 550A may be implemented with fewer, more, or different subprocesses and a different arrangement and/or ordering of subprocesses. Furthermore, any subprocess, which does not depend on the completion of another subprocess, may be executed before, after, or in parallel with that other independent subprocess, even if the subprocesses are described or illustrated in a particular order.

Initially, subprocess 610 may determine a set *S* comprising a plurality of network elements, within in the power network, to be considered. This set *S* may consist of only those plurality of network elements which can feasibly be the location of the fault. For instance, subprocess 610 may select the set S to consist of only those plurality of network elements that are downstream from an inferred outage device (e.g., as identified by the outage engine). In such an embodiment, the plurality of network elements comprises or consists of a plurality of power-line sections 450 of one or more power lines downstream from the inferred outage device. In particular, the set *S*, which may have a size *M*, may consist of those network elements that are downstream from an inferred outage device and between the inferred outage device and laterals 445 or secondary laterals whose downstream loads have no outage indications (e.g., last-gasp communications or trouble calls), and excluding individual customer-connection power lines.

Subprocess 620 may determine whether or not another one of the plurality of network elements, in the set *S* that was determined in subprocess 610, remains to be considered. In particular, subprocess 620 will iterate through each of the plurality of network elements in the set *S*. When determining that another network element remains to be considered (i.e., "Yes" in subprocess 620), process 550A may select the next network element and proceed to subprocess 630. Otherwise, when determining that no network elements remain to be considered (i.e., "No" in subprocess 620), process 550A may proceed to subprocess 640.

Subprocess 630 may calculate a power-flow drop at the selected network element. In particular, subprocess 630 may calculate the power-flow drop at the network element from a first execution of the WLS distribution state estimation to a second execution of the WLS distribution state estimation. As discussed elsewhere herein, the WLS distribution state estimation may be executed, periodically, at a plurality of times. The first execution may represent a pre-fault execution of the WLS distribution state estimation, and the second execution may represent a subsequent and successive post-fault execution of the WLS distribution state estimation. In the event that the WLS distribution state estimation is executed periodically, the second execution may be one period after the first execution.

In an embodiment, subprocess 630 retrieves the power flow ${P}_{i}^{1}$ for the selected network element *i, i* ∈ [1, *M*], from the first execution of the WLS distribution state estimation and the power flow ${P}_{i}^{2}$ for the selected network element *i* from the second execution of the WLS distribution state estimation. Then, subprocess 630 calculates the drop between power flow ${P}_{i}^{1}$ and power flow ${P}_{i}^{2}$. For instance, the power-flow drop at network element *i* may be calculated as: ${Pct}_{i} = \frac{{P}_{i}^{1} - {P}_{i}^{2}}{{P}_{i}^{1}}$ The value of *Pctᵢ* represents the confidence that network element *i* is open.

Subprocess 640 may sort the plurality of network elements in set S, according to the calculated power-flow drops. For example, the calculated power-flow drops *Pct* may be sorted from highest to lowest, to produce a sorted set *S*' of the plurality of network elements.

Subprocess 650 may determine the open network element based on the sorted set *S'* of the plurality of network elements. In particular, subprocess 650 may select at least one of the sorted plurality of network elements, from a subset of the sorted plurality of network elements for which the calculated power-flow drop satisfies (e.g., is greater than or equal to) a predefined threshold, as the identified open network element. For example, the identified open network element may comprise the one of the plurality of network elements, from among all of the plurality of network elements for which the calculated power-flow drop *Pctᵢ* satisfies the predefined threshold, that is the most upstream. To identify the most upstream network element for which the power-flow drop satisfies the predefined threshold, subprocess 650 may discard any network elements in the sorted set *S*' that do not satisfy the predefined threshold, and then traverse the remaining subset of network elements to identify the one that is most upstream within the network topology of the power network. In other words, the sorting reduces the search space for the open network element, to only the subset of network elements from the first network element in the sorted set *S'* to the last network element whose power-flow drop satisfies the predefined threshold. After subprocess 650, process 550A may end.

As mentioned above, only those network elements for which the calculated power-flow drop satisfies a predefined threshold may be considered for identification as the open network element. As examples, the predefined threshold may be a value greater than 0.5 (i.e., 50%) and less than 1.0 (i.e., 100%), such as 0.55, 0.60, 0.65, 0.70, 0.75, 0.80, 0.85, 0.90, or 0.95. The predefined threshold may be determined based on a load flow analysis of each of a plurality of first scenarios in which the power network has no fault and a load flow analysis of each of a plurality of second scenarios in which the power network has a fault, wherein a location of the fault is varied across the plurality of second scenarios. The first scenarios may be derived from historical data for the power network. The second scenarios may be generated by using graph theory to search and select network elements (e.g., power-line sections 450) where a fault may be introduced. Preferably, only network elements with more than five downstream loads and/or whose downstream loads exceed 1% of the total circuit loading are selected. For each selected network element, at least one scenario may be added to the second scenarios in which that network element is opened. Line flow analyses may be performed on all of the first and second scenarios, and the power-flow drops may be calculated for each of a plurality of pairings, including potentially all pairings, of first and second scenarios. Data analytics may be performed to select the predefined threshold that produces the highest performance (e.g., in terms of overall accuracy). It should be understood that the predefined threshold may be determined before operation of process 500.

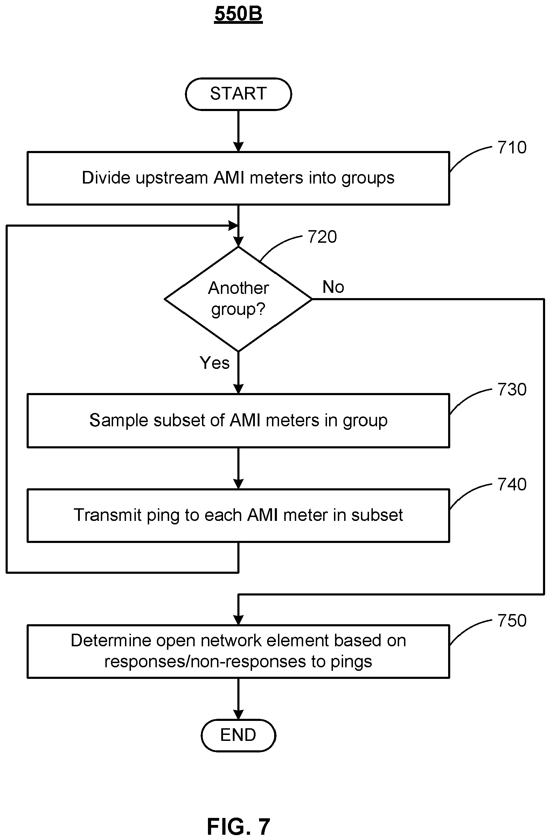

FIG. 7 illustrates an exemplary implementation of subprocess 550 from process 500, according to an embodiment. In particular, subprocess 550 may comprise process 550B (e.g., in addition to process 550A) or consist of process 550B to identify an open network element that is upstream from an inferred outage device. While process 550B is illustrated with a certain arrangement and ordering of subprocesses, process 550B may be implemented with fewer, more, or different subprocesses and a different arrangement and/or ordering of subprocesses. Furthermore, any subprocess, which does not depend on the completion of another subprocess, may be executed before, after, or in parallel with that other independent subprocess, even if the subprocesses are described or illustrated in a particular order.

Initially, subprocess 710 may divide a plurality of AMI meters 448, that are upstream from an inferred outage device, in the power network, into a plurality of groups. The plurality of AMI meters 448 may include all of the AMI meters 448 that are electrically connected to the feeder line, between the inferred outage device and the nearest upstream SCADA device. AMI meters 448 may be grouped according to their respective lateral 445. For example, the first group may consist of all AMI meters 448 in the lateral 445 that is supplied power through the most downstream fuse 440 that is upstream from the inferred outage device, the second group may consist of all AMI meters 448 in the lateral 445 that is supplied power through the second most downstream fuse 440 that is upstream from the inferred outage device, and so on and so forth, such that the last group may consist of all AMI meters 448 in the lateral 445 that is supplied power through the most upstream fuse 440 that is downstream from the nearest upstream SCADA device to the inferred outage device.

Subprocess 720 may determine whether or not another one of the plurality of groups remains to be considered. In particular, subprocess 720 will iterate through each of the plurality of groups, into which the upstream network elements were divided in subprocess 710. When determining that another group remains to be considered (i.e., "Yes" in subprocess 720), process 550B may select the next group and proceed to subprocess 730. Otherwise, when determining that no groups remain to be considered (i.e., "No" in subprocess 720), process 550B may proceed to subprocess 750.

Subprocess 730 may sample a subset of the AMI meters 448 in the selected group. For example, a certain percentage of the AMI meters 448 in the selected group may be selected for the sampled subset. The AMI meters 448 may be selected randomly or according to any other suitable sampling method. In an embodiment, the percentage of AMI meters 448 that are sampled from each group may decrease from more downstream groups to more upstream groups. In other words, the percentage of AMI meters 448 that are sampled from a group that is more downstream (e.g., the first group) will be greater than the percentage of AMI meters 448 that are sampled from a group that is more upstream (e.g., the last group).

Subprocess 740 may transmit an AMI ping request to each AMI meter 448 in the subset that was sampled in subprocess 730. The AMI ping requests may be sent over network(s) 120 or another network that connects the AMI meters 448 to management system 110. An AMI ping request, which may also be referred to as just a "ping," is a message or signal to check the connectivity of the AMI meter 448 and ensure that the AMI meter 448 is capable of active communication. In response to receiving an AMI ping request and assuming the AMI meter 448 is capable of active communication, the AMI meter 448 will transmit a response to the AMI ping request to management system 110. When a response is received from an AMI meter 448 within a defined timeout period, it can be inferred that there is no outage at the AMI meter 448. Conversely, when no response is received from an AMI meter 448 within the defined timeout period, it can be inferred that there is a potential outage at the AMI meter 448.

Subprocess 750 may determine the open network element based on one or both of responses or non-responses to the AMI ping requests that were sent, in subprocess 740, to the sampled subset of AMI meters 448 in each of the plurality of groups. In particular, any AMI meter 448 that returns a response to the AMI ping request within the defined timeout period may be tagged as having power, whereas any AMI meter 448 that does not return a response to the AMI ping request within the defined timeout period may be tagged as potentially experiencing an outage. If there are no responses from any of the sampled AMI meters 448 within a group, such that all AMI meters 448 in the group are tagged as potentially experiencing an outage, the group may be tagged as an outage group. It should be understood that each outage group may correspond to a lateral 445. Subprocess 750 may identify the most upstream fuse 440 connected to a lateral 445, represented by a group that is tagged as potentially experiencing an outage, and then perform process 550A starting from that fuse 440, instead of from the inferred outage device, to identify the open network element.

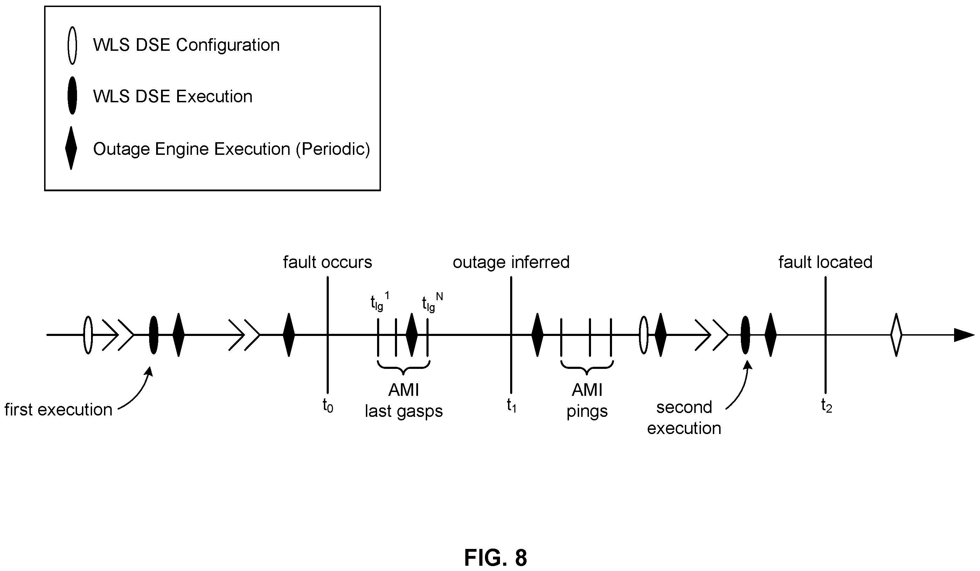

FIG. 8 illustrates a timing diagram for a process for HIF localization, according to an embodiment. In the illustrated example, an outage engine is executed periodically. In addition, a WLS distribution state estimation is executed periodically. Before each execution of the WLS distribution state estimation, the WLS distribution state estimation is configured based on the most recently available data. At time *t*₀, a high impedance fault occurs when a power-line section 450 burns open. This results in a series of last-gasp communications from AMI meters 448 that are downstream from the broken power-line section 450. The first last-gasp communication is received at time ${t}_{lg}^{1}$, and the last last-gasp communication is received at time ${t}_{lg}^{N}$*.*

At time *t*₁, the outage engine infers an outage at a protection device. Accordingly, AMI ping requests may be transmitted to a plurality of AMI meters 448, within the vicinity of the inferred outage device, in order to assess the outage. The plurality of AMI meters 448, to which to transmit AMI ping requests, may be selected based on data analytics regarding how likely the AMI meters 448 are to respond within the defined timeout period. Service transformers 444, associated with AMI meters 448 that respond to the AMI ping requests within the timeout period, are considered as energized. Conversely, service transformers 444, associated with AMI meters 448 that do not respond to the AMI ping requests within the timeout period, may be given a low weight in the WLS distribution state estimation, although their corresponding pseudo data points for nodal injection may remain the same.

In addition, a periodic or triggered localization process is performed, using a second execution of the WLS distribution state estimation, that may be configured (e.g., in terms of weights) using AMI data, such as the last-gasp communications and/or responses and/or non-responses to the AMI ping requests. The localization process may calculate power-flow drops between the first (i.e., pre-fault) and second (i.e., post-fault) executions of the WLS distribution state estimation to identify the open network element, thereby locating the high impedance fault, at time *t*₂. Notably, a plurality of inferred outage devices may be considered concurrently to identify a plurality of open network elements concurrently, as long as the timeout periods for the AMI ping requests, sent in response to all of the inferred outages, end before the configuration of the second execution of the WLS distribution state estimation, such that all of the network parameters are available at the configuration of the second execution of the WLS distribution state estimation.

### 6. Example Embodiment

Disclosed embodiments leverage AMI data and the WLS distribution state estimation to identify open network elements, such as broken power-line sections 450. For example, weights in the WLS distribution state estimation may be configured based on AMI data, such as last-gasp communications and/or responses/non-responses to ping requests which contain salient information about the topology of the power network, as well as SCADA data and/or pseudo data. Thus, outage indications, such as last-gasp communications and/or trouble calls are used, not only by the outage engine to infer an outage device, but also to configure the WLS distribution state estimation. Nodal power injection data that is input to the WLS distribution state estimation may be modified based on whether or not they are associated with an outage indication (e.g., last-gasp communication or trouble call). In addition, if a transformer (e.g., service transformer or load transformer) normally supplies power to a customer for which an outage indication is received, the corresponding nodal power injection may be set to zero for the WLS distribution state estimation.

The estimated state from the WLS distribution state estimation, in combination with the inferred outage device, may be used to define a search space for the open network element, and the open network element may be identified based on confidence values (e.g., power-flow drops) for the network elements in the search space. In particular, by comparing the results of two consecutive executions of the WLS distribution state estimation before and after the fault, power-flow drops, each representing a confidence value that a respective network element is open, may be calculated and used to sort the network elements. The most upstream network element having a power-flow drop above a predefined threshold may be determined as the most likely to be the open network element. This open network element may be a broken power-line section 450 (e.g., of an overhead power line), a fuse, a sectionalizer, or the like.

The WLS distribution state estimation may utilize redundant measurements from SCADA data points (e.g., active and/or reactive power collected from line sensors, circuit breakers 415, reclosers 420, etc.), AMI data points (e.g., voltages), and/or pseudo data points (e.g., nodal power injection), to estimate the state (e.g., nodal voltages and line flows) of a power network (e.g., distribution network) with a known network topology.

The identified open network element may be used to confirm outage indications (e.g., trouble calls), and initiate a remedial action. The remedial action may comprise opening or closing a circuit breaker (e.g., circuit breaker 415), opening or closing a switch (e.g., NO tie switch 430), rerouting power through the power network, activating or deactivating power generators, adjusting a setpoint of a power generator, curtailing a load, dispatching a repair or inspection crew to the open network element, and/or the like.

Advantageously, disclosed embodiments do not require the expensive field devices, generally required for HIF location, to capture transient signals. In addition, disclosed embodiments are capable of concurrently identifying multiple open network elements within the same power network. Furthermore, disclosed embodiments are applicable to both radial power networks and weakly meshed power networks.

The above description of the disclosed embodiments is provided to enable any person skilled in the art to make or use the invention. Various modifications to these embodiments will be readily apparent to those skilled in the art, and the general principles described herein can be applied to other embodiments without departing from the scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to:
receive (530) an indication of a value of each of one or more advanced metering infrastructure, AMI, data points for each of one or more AMI meters in a power network;
execute (540) a weighted least squares, WLS, distribution state estimation to estimate a state of the power network by minimizing a difference between measured values and estimated values of one or more network parameters, wherein the one or more network parameters comprise the one or more AMI data points; and
identify (550) an open network element in the power network based on the estimated state of the power network.

2. The method of Claim 1, wherein the open network element is a broken section of a power line in the power network, and/or
wherein the open network element is a fuse or sectionalizer.

3. The method of claim 1 or 2, wherein the one or more network parameters are a plurality of network parameters, and wherein the plurality of network parameters comprises one or more supervisory control and data acquisition, SCADA, data points, the one or more AMI data points, and one or more pseudo data points.

4. The method of Claim 3, further comprising using the at least one hardware processor to configure a weight of each of the plurality of network parameters, in the WLS distribution state estimation, such that the one or more AMI data points are weighted higher than the one or more pseudo data points, and the one or more SCADA data points are weighted higher than the one or more AMI data points for any AMI meters that are downstream from an inferred outage device in the power network.

5. The method of either one of Claims 3 or 4, wherein the one or more SCADA data points comprise at least one of voltage, active power, or reactive power, and wherein a value of each of the one or more SCADA data points is a measured value, and/or
wherein the one or more pseudo data points comprise at least one of active power and reactive power, and wherein a value of each of the one or more pseudo parameters is an estimated value.

6. The method of any one of the preceding claims, wherein the one or more AMI data points comprise at least one of voltage or an indication of whether or not a respective one of the one or more AMI meters is supplied with power from the power network, and wherein a value of each of the one or more AMI data points is a measured value from the respective one of the one or more AMI meters.

7. The method of any one of the preceding claims, further comprising using the at least one hardware processor to:
determine whether or not an outage indication has been received for any of the one or more AMI meters; and
when determining that an outage indication has been received for at least one of the one or more AMI meters, within the WLS distribution state estimation, set a power at a node, which represents a bus that supplies power to a load attached to the at least one AMI meter within the power network, to zero,
wherein preferably, the outage indication is either a last-gasp communication from the at least one AMI meter or a trouble call for the at least one AMI meter.

8. The method of any one of the preceding claims, wherein identifying the open network element comprises:
for each of a plurality of network elements in the power network, calculating a power-flow drop at the network element from a first execution of the WLS distribution state estimation to a second execution of the WLS distribution state estimation; and
determining the open network element, from the plurality of network elements, based on the calculated power-flow drops for the plurality of network elements.

9. The method of Claim 8, wherein the WLS distribution state estimation is executed periodically, and wherein the second execution is one period after the first execution, and/or
wherein the plurality of network elements comprises a plurality of sections of one or more power lines downstream from an inferred outage device.

10. The method of any one of Claims 8 or 9, wherein determining the open network element comprises:
sorting the plurality of network elements according to the calculated power-flow drops; and
selecting at least one of the sorted plurality of network elements, from a subset of the sorted plurality of network elements for which the calculated power-flow drop satisfies a predefined threshold, as the identified open network element.

11. The method of any one of Claims 8 through 10, wherein the identified open network element comprises one of the plurality of network elements, from among all of the plurality of network elements for which the calculated power-flow drop satisfies a predefined threshold, that is most upstream,
wherein preferably, the predefined threshold is determined based on a load flow analysis of each of a plurality of first scenarios in which the power network has no fault and a load flow analysis of each of a plurality of second scenarios in which the power network has a fault, wherein a location of the fault is varied across the plurality of second scenarios.

12. The method of any one of the preceding claims, wherein identifying the open network element comprises:
dividing a plurality of AMI meters, upstream from an inferred outage device, in the power network, into a plurality of groups;
from each of the plurality of groups, sampling a subset of the AMI meters in that group, and transmitting an AMI ping request to each AMI meter in the sampled subset; and
determining the open network element based on one or both of responses or non-responses to the AMI ping requests.

13. A system comprising:
at least one hardware processor configured to perform the method of any one of the preceding claims.

14. A computer program product comprising instructions that, when executed by a computer, cause the computer to perform the method of any one of Claims 1 through 12.

15. A non-transitory computer-readable medium having instructions stored thereon, wherein the instructions, when executed by a processor, cause the processor to perform the method of any one of Claims 1 through 12.
